# EUROPEAN PATENT SPECIFICATION

(11) **EP 3 289 796 B1**
(45) Date of publication and mention of the grant of the patent: **08.06.2022**
(21) Application number: 15723153.1
(22) Date of filing: 29.04.2015
(51) Int. Cl.: H04W 28/02, H04L 47/24, H04L 67/61

(54) **LOW ACCESS PRIORITY CAPABILITY CONTROL**
FÄHIGKEITSSTEUERUNG MIT GERINGER ZUGRIFFSPRIORITÄT
COMMANDE DE CAPACITÉ À PRIORITÉ D'ACCÈS BASSE

(43) Date of publication of application: 07.03.2018
(73) Proprietor: Telefonaktiebolaget LM Ericsson (publ), 164 83 Stockholm (SE)
(72) Inventor: CASTRO CASTRO, Fabian, 15178 Arillo/Oleiros/ A Coruña (ES); FERNANDEZ ALONSO, Susana, 28009 Madrid (ES)
(74) Representative: Zacco Sweden AB
(86) International application number: PCT/EP2015/059327
(87) International publication number: WO 2016/173642

(56) References cited:
- EP-A1- 2 806 605
- US-A1- 2012 224 677
- ERICSSON: "Introduce the Dedicated Core Network (DECOR) feature", 3GPP DRAFT; S2-150781_CR23401_DECOR-BASED ON 0651_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San José del Cabo, Mexico 13 April 2015 (2015-04-13), XP050942664, Retrieved from the Internet: URL:http://www.3gpp.org/ftp/Meetings_3GPP_ SYNC/SA2/Docs/ [retrieved on 2015-04-13]
- NTT DOCOMO ET AL: "Introduce the Dedicated Core Network (DECOR) feature", 3GPP DRAFT; S2-150927_23401_CR_DECOR-V6_DCM_HW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Jose Del Cabo, Mexico; 20150413 - 20150417 13 April 2015 (2015-04-13), XP050942808, Retrieved from the Internet: URL:http://www.3gpp.org/ftp/Meetings_3GPP_ SYNC/SA2/Docs/ [retrieved on 2015-04-13]
- "3rd Generation Partnership Project; Technical Specification Group Services and System Aspects; General Packet Radio Service (GPRS) enhancements for Evolved Universal Terrestrial Radio Access Network (E-UTRAN) access (Release 13)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.2.0, 12 March 2015 (2015-03-12), pages 1-313, XP050927727, [retrieved on 2015-03-12]

## Description

### Technical Field

The present invention relates to a communication system for use in a communication network. Specifically, the present invention relates to a communication system for providing a communication service to a user terminal (user equipment, UE) based on a subscribed access priority of the user terminal. The present invention also relates to a corresponding method of operating the communication system, corresponding network entities, and to corresponding computer programs and computer program products storing such computer program.

### Background

In a typical cellular communication system, also called a wireless communication system, a wireless terminal, also called a mobile terminal or user equipment (UE) communicates via a Radio Access Network (RAN) to one or more Core Networks (CN). The RAN typically involves at least one radio base station (RBS) also known as a Node B in some RAN technologies or E-Node B in other RAN technologies. In some RAN network implementations several RBSs are connected to a radio network controller (RNC). The RAN may be for example GERAN or UMTS Terrestrial RAN (UTRAN). The UTRAN has further evolved into the Evolved UTRAN (E-UTRAN). These radio access networks are commonly known as 3GPP access networks. The evolution of the UTRAN into E-UTRAN known also under the term Long Term Evolution (LTE) was accompanied by an evolution of the non-radio aspects of the network architecture which resulted in the Evolved Packet Core (EPC). Together the LTE and the EPC constitute the Evolved Packet System (EPS).

The EPS provides the user with IP connectivity to an external Packet Data Network (PDN) for accessing the internet. Other running services such as for example Voice over IP (VOIP) are also provided. The EPS uses the concept of EPS bearers to route IP traffic from a gateway in the PDN to the UE. In general a bearer is an IP flow with a defined quality of service (QoS) between the gateway and the UE. One example architecture of the EPC is defined in, but not limited to, *3^{rd} Generation Partnership Project (3GPP) Technical Specification* *(TS) 23.401.* There, the EPC comprises several network entities having different functions. The main network entities are the PDN gateway (PGW), the Mobility Management Entity (MME)/Serving GPRS Support Node (SGSN) and the Serving Gateway (SGW).

The PGW is the interconnection point between the EPC and the external PDN network. The PGW routes packets to and from the PDN network. The SGW is the interconnection point between the RAN side and the EPC side. The SGW serves the UE in that the SGW routes the incoming and outgoing packets. The SGW is further the anchor point for intra-LTE mobility and other 3GPP accesses. The MME/SGSN is a control node that deals with the signaling between the UE and the CN. For 3GPP access networks, the bearer is usually an end-to-end bearer between the UE and the PGW. The bearer ID is known by the PGW, the MME, the E-Node B and the UE. Every PDN connection may have at least one bearer called the default bearer. Remaining or other bearers on the PDN connection are called dedicated bearers.

In addition to the above mentioned network elements the EPC includes other logical nodes and functions such as the Home Subscriber Server (HSS) and the Policy and Charging Rules Function (PCRF). The HSS contains user's subscription data such as the EPS-subscribed QoS profile and any access restrictions for roaming. The PCRF is a functional entity in charge of deciding charging, policies and QoS for services of a given user. Further, network operators may want to define and enforce certain set of rules in the network. A set of such rules may constitute a so-called policy. Such a policy may address decisions on whether a certain user is entitled or authorized to enjoy a service, e.g. at a given QoS, and whether the network can provide the service to the user. The network operators may try to enforce this policy based on information about the UE. One kind of information is the access priority of the UE and in particular the low access priority of the UE.

A UE may be configured for low access priority as defined in, but not limited to, *3^{rd} Generation Partnership Project (3GPP) Technical Specification (TS) 23.060.* This configuration is primarily for usage by applications or users that can tolerate being deferred when competing with other UEs for accessing network resources, e.g. during congestion situations. A subscriber can by agreement with its network operator be required to use UEs that are configured for low access priority. The agreement may include a specific tariffing. Call Detail Records (CDRs) show whether a PDN connection was activated for use with low access priority. UE that is configured for low access priority may also be configured with permission to override the low access priority restrictions. This configuration is primarily for usage by application or users that can tolerate being deferred most of the time due to low access priority when competing with other UE for accessing network resources, but occasionally the application or user needs access to the network also when the low access priority configuration would prevent getting access. For getting network access also during low priority access conditions, the user or application (upper layers in UE) may request the UE to initiate the activation of a PDN connection without low access priority.

The permission for overriding low access priority restrictions by the application or user should be handled with care because as long as such PDN connection without low access priority is active, the UE is not affected by any access restriction conditions the network may set for access with low access priority. That is, after the activation of a PDN connection without low access priority, all further MM and RRC access requests of the UE are performed without low access priority as long as such PDN connection is active.

However, the conventional mechanisms, in particular, those relating to control of the connections of UE, present several drawbacks. Amongst others, it can be difficult, or even impossible, to determine whether overriding of restrictions is justified or permissible. Furthermore, involved entities have only limited possibilities to react to policy overrides or to investigate on the permissibility of a granted service or QoS. Therefore, there is a need for improvement of the controlling of connections of UEs, especially in the context of services and/or specific QoS to be granted to individual users.

Document EP 2 806 605 A1, 26 November 2014, relates to a method and a device for setting priority of data transmission. A terminal, which is set to transmit a low priority data to a network, transmits a connection request to the network in order to transmit normal priority data, and receives and stores priority information on the data transmission from the network.

### Summary

The above mentioned problems and drawbacks of the conventional concepts are solved by the subject-matter of the independent claims. The invention is defined by the independent claims. Further embodiments are described in the dependent claims.

### Brief description of the drawings

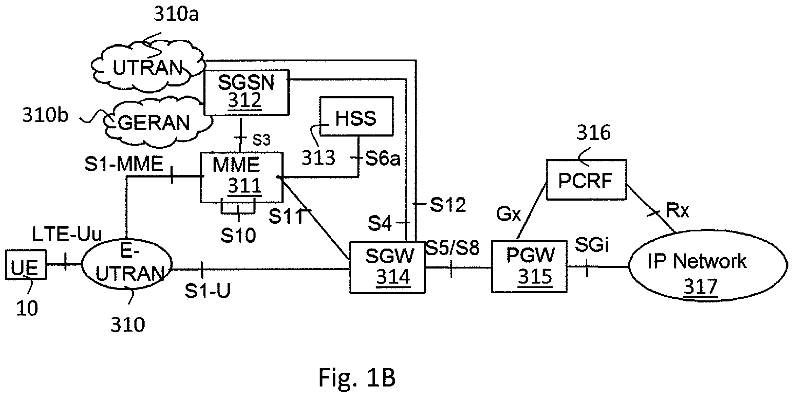

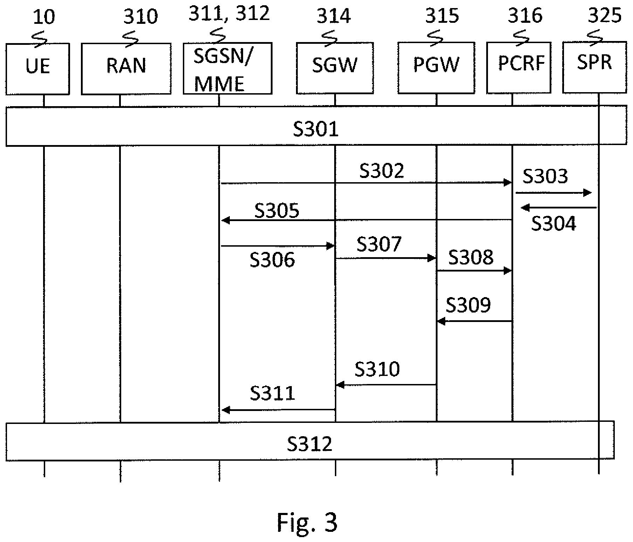

The invention is defined by the embodiment shown in figures 1B and 3. All other references to "embodiments" are to be understood as examples useful for understanding the invention.

Embodiments of the present invention, which are presented for better understanding the inventive concepts but which are not to be seen as limiting the invention, will now be described with reference to the Figures in which:
- Figure 1A, 1B, 1C and 2A: show a schematic view of network architectures according to embodiments of the present invention;
- Figure 2B, 3, 4 and 5: show a schematic view of procedures carried out amongst the involved entities according to further embodiments of the present invention;
- Figure 6: shows a flowchart representation of method embodiment of the present invention;
and
- Figure7: shows a schematic view of a network entity in communication with a network according to another embodiment of the present invention.

### Detailed description

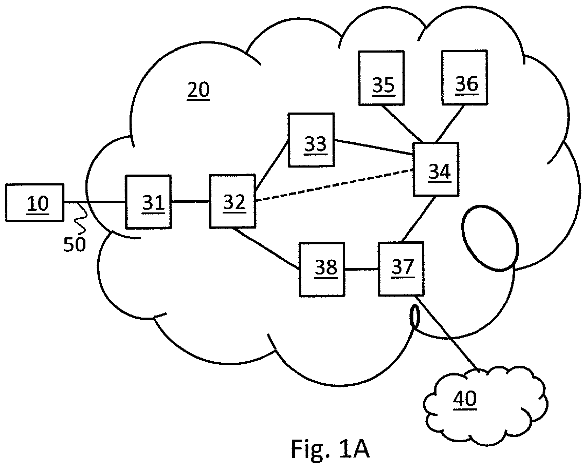

Figure 1A shows a schematic view of a network architecture according to an embodiment of the present invention. User equipment (UE) 10 receives a communication service from a network 20 through a communication path 50. The UE 10 can be, for example, any one of a mobile phone, smart phone, IP telephone, tablet computer, personal digital assistant (PDA), personal computer (PC), notebook PC, television set, and the like. The network 20 comprises one or more network entities 31 to 38. In a way, one or more of these network entities may be in or may be involved with a communication path toward the UE. The communication paths are depicted with solid and dashed lines. Some communication paths may be conventional communication paths while some communication paths may be alternative and/or optional communication paths. The network entities 31..38 constitute a communication system for providing a communication service to the UE 10. These network entities may be nodes, switches, servers etc. that handle the communication. In general, however, an entity may also be implemented as some specific functionality by means of code being executed on hardware that is, as such, shared with other functionalities and applications (code).

At least one network entity 37 may communicate with a further network 40. The network 40 may be the actual originator of the communication service. The network 20 and/or the network 40 can be a, as such conventional, communication network, such as a telecommunication network along one or more of a 3GPP, LTE, 3G, 4G, or a further generation standard and type, the internet, an intranet, a local area network (LAN), a wide area network (WAN), a corporate network, a virtual private network (VPN), a wireless network, and the like.

According to embodiments of the present invention, some sort of subscription information can be associated with the UE 10. The content of the subscription information may be determined by agreement with the network operator. In other words, the subscription information is the result of the specific arrangement between a network operator and a user with regard to the services granted. At least one of the entities 31...38 in the communication system may store the subscription information. In particular, the subscription information may be indicative of a subscribed access priority of the UE 10. The subscribed access priority may be for a particular communication service only, for a group of communication services, or in general for every communication service enjoyed by the UE 10.

In some embodiments of the present invention the subscribed access priority can be a low access priority. In the following UE 10 with a subscribed low access priority may be termed as "low access priority user". When trying to establish a connection with the communication system, a low access priority user may be deferred when competing with other UEs for accessing network resources. For instance during network congestion situations the communication system may introduce access restriction conditions for low access priority users. Restriction conditions may include, but are not limited to, introducing a certain time period during which low access priority users are not allowed to initiate the establishment of a connection with the communication system. In other embodiments of the present invention the subscribed access priority is a non-low access priority. An UE 10 with a non-low access priority, also termed hereafter likewise "a non-low access priority user", may not be affected by access restriction conditions introduced by the communication system.

In yet other embodiments of the present invention the subscribed access priority is a low access priority with overriding capabilities. Such a UE 10 can override the low-access priority and when overriding the low-access priority the UE is not affected by access restriction conditions introduced by the communication system. The overriding capabilities may relate to certain situations and/or conditions. For example, the UE may be allowed to override the low-access priority for a maximum number of times within a time period, for example, an hour, a day, a week, one month, or a billing period. This maximum number of times may be established when subscribing the UE 10 for communication services of the particular network operator. Further, the UE may be allowed to override the low-access priority during a particular time period, for instance a particular time of the day (e.g. not during peak hours). These certain situations and/or conditions may be established in agreement with the network operator or may be dynamically determined by the communication system.

The subscription information is further indicative of an allowance of the UE to override the subscribed access priority. In some embodiments of the present invention in which the subscribed access priority is a low-access priority, the subscription information can be indicative of an allowance of the UE 10 to override the low-access priority. The allowance may be related to a certain condition and/or certain event. For example, the UE may be allowed to override the low access priority for enjoying particular communication services. The subscription information can be further indicative of a number of times the UE 10 is allowed to override the subscribed access priority. Each time the subscribed access priority is overridden the number of times the UE 10 has overridden the access priority is increased. This number is stored in the UE 10 and/or the network entity storing the subscription information. Likewise, a corresponding counter may also count downwards, so the end of the overriding permission is indicated by, for example, a value of zero.

When the UE 10 initiates establishment of a communication with the network 20 through the communication path 50 for receiving a communication service the UE 10 notifies access information to the communication system. The UE 10 notifies access information, for example, in a message sent to the communication system. The access information is indicative of a desired access priority of the UE 10. The UE 10 may notify the desired access priority explicitly by including a particular indication in the message sent to the communication system or implicitly by not including the particular indication in the message sent to the communication system. In some embodiments of the present invention the particular indication may be a low access priority indication (or indicator).

The low access priority indication may be any kind of combination of bits known by the communication system to represent a low-access priority indication. Accordingly, when the UE includes the low access priority indication in the message sent to the communication system the UE notifies the communication system that the desired access priority is a low access priority. On the other hand, when the UE does not include the low access priority indication in the message sent to the communication system the UE notifies the communication system that the desired access priority is a non-low access priority. In general, the desired access priority may correspond to the subscribed access priority but may also differ from the subscribed access priority. In principle, a mechanism can also be implemented the other way round, in that a high access priority indication is given for requesting high access priority, and no or the low access priority indication is given when low access priority is sufficient or requested.

In any way, however, the communication system receives the access information and obtains the subscription information of the UE 10. The communication system can then determine, based on the subscription information and the access information, an applicable access priority and a policy for providing the communication service to the user terminal.

In some embodiments of the present invention, the determining of the applicable access priority may comprise comparing the subscribed access priority with the desired access priority and deriving a low access priority condition, as the applicable access priority, based on the subscription information and the access information. The low access priority condition can be indicative of whether the user terminal has initiated the establishment of the connection with low access priority indication.

In some embodiments of the present invention, the determining of the policy may comprise evaluating applicable policies considering the determined applicable access priority and selecting the policy out of the evaluated applicable policies. At least some of the applicable policies may be pre-stored policies. In other embodiments of the present invention, determining the policy may comprise evaluating applicable policies considering the determined applicable access priority and creating a policy by combining several applicable policies. The policy may comprise an indication of accepting the establishment of the connection with the communication system. The policy may further comprise an indication of a quality of service for the communication service according to the low access priority condition. Yet further, the policy may comprise an indication of a specific rating group to tariff the UE according to the low access priority condition. In still further embodiments of the present invention, the policy may comprise an indication of rejecting the establishment of the connection with the communication system. The policy may in addition or alternatively comprise an indication of a time interval for retrying the establishment of the connection.

In some embodiments of the present invention, the determining of the applicable access priority and the policy may be further based on other factors or conditions. These factors or conditions may for example involve the network situation, for example the level of congestion in the current location of the UE 10. The current location of the UE may refer to the current cell of the UE and/or the neighboring cells. These factors or conditions may further involve the maximum number of overridings allowed per certain time period, for instance one month. This maximum number may be established by subscription. In some embodiments of the present invention these factors may further involve the kind of communication service the UE 10 is trying to enjoy.

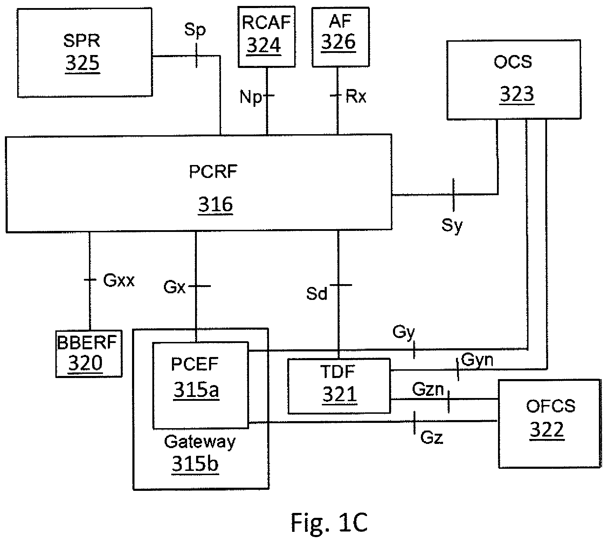

An embodiment of the present invention showing in more details at least some of the network entities from the previous embodiments as well as the corresponding reference points between them is described next in relation with Figure 1B and Figure 1C. In this embodiment the UE 10 wants to establish a connection with a communication system for receiving a communication service from an IP network 317. The IP network may be any kind of network offering any kind of IP services such as for example but not limited to IP multimedia services (IMS). The communication system is comprised of a plurality of interconnected network entities. In this embodiment of the present invention the communication system comprises at least the SGW 314, the PGW 315, the PCRF 316, the MME 311, the SGSN 312 and the HSS 313. In other embodiments of the present invention the communication system may comprise at least part of these network entities and/or further network entities.

The UE 10 usually establishes a communication with the communication system through a radio access network (RAN). In some embodiments of the present invention the RAN can be a E-UTRAN network 310. In these embodiments of the present invention, the network entity that processes the signaling between the UE 10 and the communication system is usually the MME 311. In other embodiments of the present invention, the access network can be the UTRAN 310a or the GERAN 310b. In these embodiments of the present invention the SGSN 312 is usually responsible for the signaling between the UE 10 and the communication system. In yet other embodiments of the present invention, the RAN may be any other 3GPP or non-3GPP RAN. The RAN comprises at least one RBS also referred hereafter as Node B or E-Node B. In other embodiments the RAN may also comprise an RNC. In some embodiments, the reference points (interfaces) between the network entities, between the network entities and the RAN as well as between the UE and the RAN (e.g. E-UTRAN), are usually LTE-Uu, S1-MME, Sl-U, S3, S4, S5, S6a, Gx, S10, S11, S12, SGi and Rx.

In one embodiment of the present invention, the control of the applicable access priority and the policy for providing the communication service to the user equipment 10 as described above may be implemented with a policy and charging control (PCC) architecture. This architecture is schematically depicted in Figure 1C. Related support can also be taken from *3^{rd} Generation Partnership Project (3GPP) Technical Specification (TS) 23.203,* which specifies the PCC functionality for evolved 3GPP packet switched domain, including both 3GPP accesses (GERAN/UTRAN/E-UTRAN) and non-3GPP accesses. The present invention is not limited to this architecture but any other suitable architecture may also be implemented in other embodiments.

In the following, such a PCC policy and charging control architecture is explained. The PCRF 316 is a functional element that encompasses policy control decision and flow based charging control functionalities. The PCRF provides network control regarding the service data flow detection, gating, QoS and flow based charging (except credit management) towards the Policy and Charging Enforcement Function (PCEF) 315a. The PCEF may be part of the Gateway 315b as depicted in the figure or may be a separate entity. The PCRF receives session and media related information from the Application Function (AF) 326 and informs the AF of traffic plane events. The PCRF 316 may provision PCC Rules to the PCEF 315a, located at the Gateway 315b, e.g. a PGW 315, via the Gx reference point and may provision QoS Rules to the Bearer Binding and Event Reporting Function (BBERF) 320 via the Gxx reference point (for deployments based on PMIP/DSMIP protocol in the core network). The PCRF 316 may inform the PCEF 315a through the use of PCC rules on the treatment of each service data flow that is under PCC control, in accordance with the PCRF policy decision(s).

The PCEF 315a encompasses service data flow detection (based on the filters definitions included in the PCC rules), as well as online and offline charging interactions (not described here) and policy enforcement. Since the PCEF 315a is the one handling the bearers it is the entity where the QoS is being enforced for the bearer according to the QoS information coming from the PCRF 316. With the 3GPP Release 11, an entity in the PCC Architecture is implemented as a so-called Traffic Detection Function TDF 321 that is a Deep Packet Inspection DPI box that monitors the payload and detects when an application is initiated/terminated. This functionality can also reside in the PCEF 315a.

The TDF 321 can perform solicited and unsolicited application reporting. For the solicited case, the PCRF 316 instructs the TDF 321 on which applications to detect and report to the PCRF 316 by activating the appropriate Application Detection and Control ADC rules. The PCRF 316 may instruct the TDF 321 (or PCEF 315a) what enforcement actions to apply for the detected application traffic.

The Application Function (AF) 326 is an element offering applications in which service is delivered in a different layer (i.e. transport layer) from the one the service has been requested (i.e. signaling layer). One example of an AF 326 is the Proxy Call Session Control Function (P-CSCF) of the IMS CN subsystem. The AF 326 communicates with the PCRF 316 to transfer dynamic session information (i.e. description of the media to be delivered in the transport layer). This communication is performed using the Rx interface.

3GPP has defined also an Sy interface between PCRF 316 and the Online Charging System (OCS) 323 to allow the PCRF 316 to perform policy control decisions (QoS, gating, redirection, ect.) based on spending limits, based on time, volume or money available in the OCS 323. This allows for example, subscriber plans with high QoS up to certain money limit per day and a lower QoS beyond that. The Sy interface between PCRF 316 and OCS 323 enables transport of indications about charging related events from the OCS 323 to the PCRF 316.

With 3GPP Release 13, an entity is considered in the PCC Architecture as a so-called RAN Congestion Awareness Function (RCAF) 324 that is an element which reports RAN User Plane Congestion Information (RUCI) via the Np interface to the PCRF 316 to enable the PCRF to take the RAN user plane congestion status into account for policy decisions.

The Subscriber Profile Repository (SPR) 325 is a logical entity that contains all subscriber/subscription related information needed for subscription-based polices and IP-CAN bearer level PCC rules by the PCRF 316. The SPR 325 may be combined with or distributed across other databases in the operator's network.

The Offline Charging System (OFCS) 322 is a grouping of charging functions used for offline charging. It collects and processes charging events from one or more Charging Trigger Functions (CTFs), and it generates CDRs for subsequent offline downstream billing processes.

Further to the above discussed Gx, Gxx, Sy and Np reference points (interfaces) Figure 1C shows also the Sp, Np, Rx, Sy, Gxx, Gx, Sd, Gy, Gyn, Gzn and Gz reference points (interfaces).

With reference to Figure 1B, the UE 10 is trying to establish a PDN connection with the communication system. In some embodiments of the present invention the UE 10 may initiate a PDP context establishment in GPRS access while in other embodiments the UE sends an EPS bearer request in EPS access. During the signaling for the establishment of the PDN connection i.e. during the exchange of messages with the communication system for establishment of the PDN connection the UE 10 notifies the communication system of access information as described above. The access information is indicative of the desired access priority as described above. At least one network entity of the communication system may receive the notified access information. In some embodiments of the present invention this entity may be any one of the MME 311 and the SGSN 312. The MME 311 or the SGSN 312 reports the access information to at least one further network entity of the communication system. In some embodiments, the MME 311 or the SGSN 312 may report the access information to the SGW/PGW 314, 315 that in turn reports the access information to the PCRF 316. In other embodiments of the present invention, the MME 311 or the SGSN 312 may report the access information to the PCRF 316.

The PCRF 316 is provided with an interface for receiving the access information indicative of the desired access priority. As discussed above the desired access priority is notified through the presence or absence of a low access priority indication in the message sent from the UE 10 to the communication system. In some embodiments of the present invention, the PCRF may receive the low access priority indication from the SGSN/MME 311, 312 when such indication is received in the SGSN/MME 311, 312 from the UE 10 as discussed above. In other embodiments of the present invention, the PCRF 316 may receive the low access priority indication from the PGW 315 when such is available in the PGW 315 as discussed above.

When the PCRF 316 receives the access information and further retrieves the subscription information of the user equipment for the communication service. The PCRF 316 can retrieve the subscription information from an internal or external subscription database. In this embodiment of the present invention the subscription database can be the subscription profile repository SPR 325 as shown in Figure 1C. In other embodiments of the present invention the subscription database can be a different network entity, such as e.g. a user data repository (UDR) not illustrated in any drawing and communicating with the PCRF via a so-called Ud reference point. Even though UDR and SPR offer equivalent functionality, for the sake of simplicity, only the SPR 325 is referred to hereinafter. In yet other embodiments of the present invention the subscription database can be collocated in the PCRF 316. The SPR 325 usually stores the subscription information and further the SPR 325 reports to the PCRF 316 the subscription information. In particular, the SPR 325 usually reports to the PCRF 316 whether the user is a low access priority user, a low access priority user with overriding capabilities or non-low access priority user. Again, this can be implemented other way round by indicating respectively high access priority rights. The PCRF 316 can then execute a set of logic steps to evaluate the information received and determines the applicable access priority and the policy for providing the communication service as described above. When evaluating the information received the PCRF 316 may for example compare the subscribed access priority and the desired access priority. The PCRF 316 may derive the low access priority condition as an applicable access priority. The low access priority condition indicates whether the UE 10 has initiated the establishment of the connection with low access priority. The PCRF 316 can then take appropriate actions to proceed in accordance with the determined access priority and the policy.

The PCRF may proceed at least in three ways as follows. In the present invention, the PCRF 316 detects that the UE 10 is a low access priority user accessing with low access priority, if the low access priority indication is received from the MME/SGSN 311, 312 or the PGW 315. In this case the PCRF will evaluate the applicable policies considering the low access priority condition to take the appropriate decisions for determining the policy. In some embodiments of the present invention, the policy may comprise at least one of Deny or Accept the PDN connection, change the rating group for tariffing the UE 10, apply a particular level of QoS etc. The PCRF 316 responds to UE initiated session establishment according to the determined policy.

In the present invention, the low access priority user can have overridden the low access priority condition. This can be detected by the PCRF 316 when the low access priority indication is not included in the message sent from the UE 10 but the subscription information indicates that the user is a low access priority user. In that case the PCRF checks if there is any limitation regarding the number of times the UE can override the low access restriction, and in that case increases the number of times the UE has overridden the low access restriction and checks if the limit has been surpassed or not. The PCRF evaluates the applicable policies considering the low access priority condition to take the appropriate decisions for determining the policy. In some embodiments of the present invention, this policy may comprise at least one of accept or deny the PDN connection for example if the number of times the UE 10 can override the low access restriction has been surpassed, change the rating group for tariffing the UE 10, apply a particular level of QoS, etc. The PCRF 316 responds to UE initiated session establishment according to the determined policy.

In yet other embodiments of the present invention, the PCRF 316 can detect that the user is a non-low access priority user, if it did not receive any low access priority indication from the SGSN/MME 311, 312 and the subscription information does not indicate that the user is a low access priority user. In this case the PCRF 316 will apply the user policies according to existing procedures.

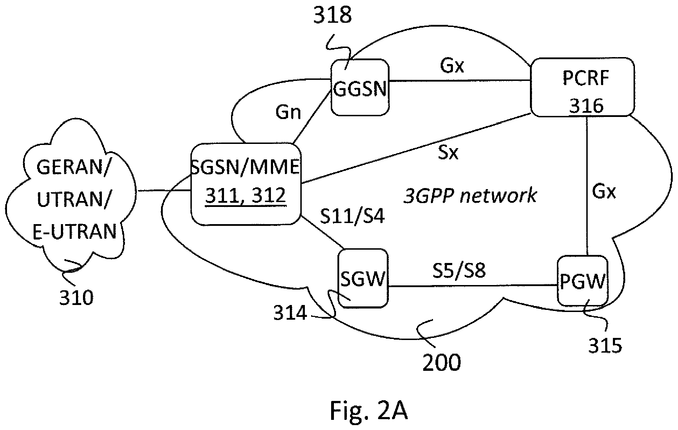

As described above, the PCRF 316 can receive the information indicative of a desired access priority of the user equipment through different network entities i.e. the MME 311, the SGSN 312 or the PGW 315 and different interfaces (reference points). In some embodiments of the present invention for GTP S5/S8 interface (see TS 23.401 or Figure 1B and 2A) or GTP Gn/Gp (see TS 23.060) the low access priority indication can be conveyed via GTP to the GGSN/PGW and then through the Gx to the PCRF 316. For PMIP S5/S8 (see for example TS 23.402) the low access priority indication can be conveyed to the SGW 314 and then via Gxx to the PCRF 316. In further embodiments of the present invention, the PCRF 316 can receive the access information from the SGSN/MME 311, 312 via a further interface defined between the PCRF 316 and the SGSN/MME 311, 312, the Sx interface. Further details of this interface may be found in WO 2013/053896 A1.

The Sx interface defined between MME/SGSN 311, 312 and the PCRF 316 is extended in accordance with this specification for conveying information indicative of the desired access priority of the user terminal. This MME/SGSN 311, 312 may be aware of the low access restriction status of the UE 10, and may inform the PCRF 316 at PDN connection establishment of this information. The Sx interface is intended for mobility based policies. The Sx interface comprises providing access network information to the PCRF 316, like for example location information. The Sx interface further assists the SGSN/MME 311, 312 to select the PGW/GGSN 315, 318 based on policies and even further steer the UE 10 to certain Radio access type indicating by the PCRF 316 to the SGSN/MME 311, 312 the access type to select by the UE 10.

Figure 1B and 2A show in more details the interfaces for conveying the access information to the PCRF 316 according to embodiments of the present invention. In this embodiment the RAN 310 may be any one of GERAN, UTRAN or E-UTRAN. However the RAN 310 is not limited to these networks only but may be any other 3GPP or non-3GPP RAN. The RAN 310 is connected to at least one network entity being part of the communication network 200. The interrelated network entities in the communication network 200 constitute a communication system. In this embodiment the communication network comprises at least the SGSN/MME 311, 312, the GGSN 318, the PCRF 316, the PGW 315 and the SGW 314. The figure also shows the corresponding reference points (interfaces) between the network elements. The interface between the SGSN 312, 312 and the GGSN 318 is the Gn interface (an MME of EPS may not be connected to a GGSN of GPRS), the interface between the GGSN 318 and the PCRF 316 is the Gx interface, the interface between the PCRF 316 and the PGW 315 is the Gx interface, the interface between the PGW 315 and the SGW 314 is the S5 interface and the interface between the SGW 314 and the SGSN/MME 311, 312 is the S11/S4 interface.

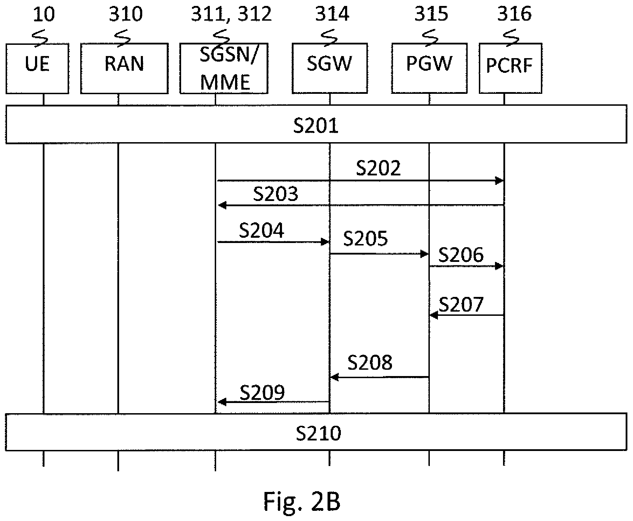

In Figure 2B a possible procedure is now described in terms of a more detailed embodiment of the present invention for an Initial Attach procedure as specified in TS 23.401 including the Sx interaction between SGSN/MME 311, 312 and PCRF 316 (see WO 2013/053896 A1 plus the extensions provided for in the present disclosure). For brevity in this and in the following figures the radio access network is simply termed as RAN 310. The RAN 310 may be, but not limited to any one of GERAN, UTRAN or E-UTRAN as described above. As further described above the RAN 310 comprises at least one RBS, termed also as Node B or E-Node B. In addition, in some embodiments of the present invention the RAN 310 may comprise an RNC.

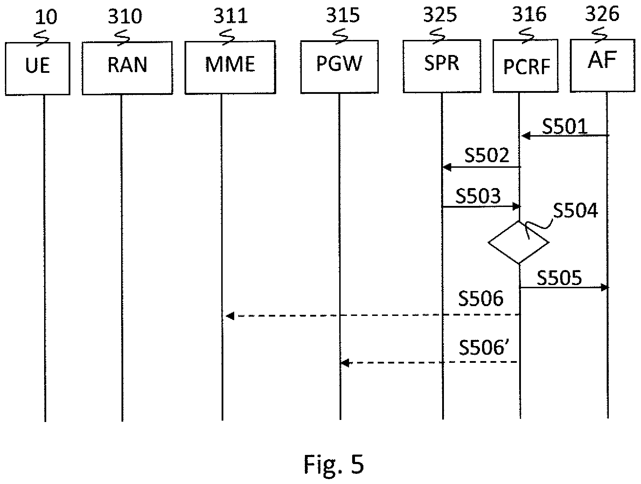

In step S201 an initial attach is initiated (for example as described for example in 3GPP TS 23.401, Figure 5.3.2.1-1 up to step 12). In step S202 the SGSN/MME 311, 312 initiates the Sx interface towards the PCRF 316 and includes at least the UE Identity, PDN Identifier and APN. The UE's identity and PDN Identifier are used to identify the subscriber and in PCRF selection to locate the PCRF function with the corresponding IP-CAN session established by the PGW 315. In step S203 the PCRF 316 responds to the SGSN/MME 311, 312 session request. The PCRF 316 may subscribe to event notifications from the SGSN/MME 311, 312 at this point e.g. location changes, radio access type changes, or any other information that is available in the SGSN/MME 311, 312 for this user. In step S204 the SGSN/MME 311, 312 sends create session request.

In step S205 the SGW 314 sends create session request. In step S206 the PGW 315 initiates a new Gx session. The PCRF 316 correlates the Gx session with the session request from the SGSN/MME 311, 312. In step S207 the PCRF 316 evaluates the applicable policies, considering in the evaluation the information previously received through Sx from SGSN/MME 311, 312, like location information and responds to the Gx session request. In step S208 the PGW 315 sends a create session response to the SGW 314. In Step S209 the SGW 314 sends a create session response to the SGSN/MME 311, 312. In step S210 the attach procedure continues (as in, for example, TS 23.401 after step 16 in Figure 5.3.2.1-1). Any personalized parameters provided to the SGSN/MME 311, 312 from the PCRF 316 are applied and used internally in the SGSN/MME 311, 312 and in successive procedures of relevance.

Next an embodiment of the present invention is described when the Sx interface between the MME/SGSN 311, 312 and the PCRF 316 is deployed for conveying information on the desired access priority of the UE 10. In this embodiment, the desired access priority is conveyed through the Sx interface. A schematic hand shake diagram is given in Figure 3 for possible signaling amongst the involved entities according to an embodiment of the present invention. In step S301 attach procedure is performed (as described, for example, in 3GPP TS 23.401, Figure 5.3.2.1-1 up to step 12). In step S302 the SGSN/MME 311, 312 initiates the new interface towards the PCRF 316 and includes at least the UE Identity, PDN Identifier and APN. If available, the SGSN/MME 311, 312 also includes the low access priority indication, as a desired access priority. The UE's identity and PDN Identifier requested are used to identify the subscriber and in PCRF selection to locate the PCRF function with the corresponding IP-CAN session established by the PDN GW. In step S303 the PCRF 316 contacts the SPR 325 in order to get the subscription information of the UE 10. In step S304 the SPR 325 provides the subscription information of the UE 10. It includes an indicator whether the UE 10 is a low access priority user, the indicator being indicative of a subscribed access priority.

The PCRF 316, based on the presence or absence of the low access priority indication in step S302 and the subscription information received in step S304 derives the low access priority condition, as the applicable access priority, and the applicable policies. In step S305 it responds to the SGSN/MME 311, 312 session request according to those policies. The PCRF 316, depending on the low access priority condition, and other factors, may decide to download to the SGSN/MME 311, 312 an indication to steer the user to a different radio access type or it may reject the establishment of the PDN connection, or any other dynamic policy supported between the SGSN/MME 311, 312 and the PCRF 316. As discussed above, the other factors, involve at least one of maximum number of overridings per period (for example month) established by subscription and network situation, for example the level of congestion in the location of the UE 10.

In step S306 the SGSN/MME 311, 312 sends create session request. In step S307 the SGW 314 sends create session request. In step S308 the PGW 315 initiates a new Gx session. The PCRF 316 correlates the Gx session with the session request from the SGSN-MME 311, 312. In step S309 the PCRF 316 evaluates the applicable policies, considering in the evaluation the information previously received through Sx from SGSN/MME 311, 312, including the low access priority if received. Policy decisions that PCRF 316 can take based on low access priority condition may comprise, certain level of QoS, rating group or any other dynamic policy supported between the PGW 315 and the PCRF 316. In step S310 the PGW 315 sends a create session response to the SGW 314. In step S311 the SGW 314 sends a create session response to the SGSN/MME 311, 312. In step S312 the attach procedure is completed (as in, for example, TS 23.401 after step 16 in Figure 5.3.2.1-1). As a possible advantage, in this embodiment of the present invention the PCRF 316 can make an early decision on the applicable policies (Step S305) before establishing the Gx session.

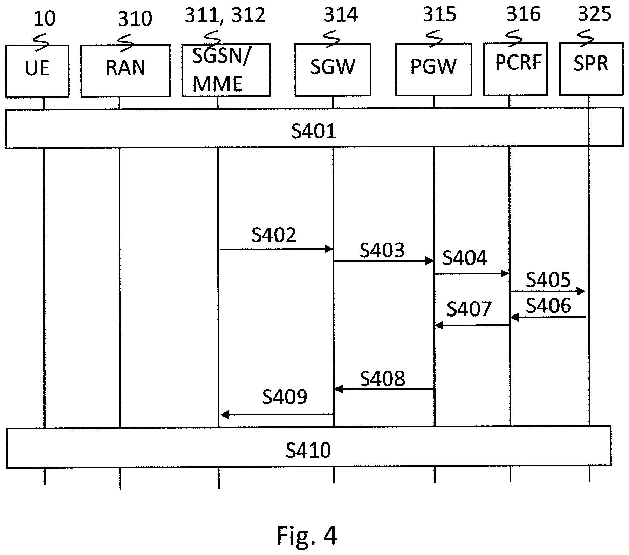

Next an embodiment of the present invention is described in which the low access priority indication is conveyed through GTP. A schematic hand shake diagram is given in Figure 4 for possible signaling amongst the involved entities according to an embodiment of the present invention. In step S401 attach procedure is performed (as described, for example, in TS 23.401, Figure 5.3.2.1-1 up to step 12). In step S402 and step S403 the SGSN/MME 311, 312 as part of the existing procedures establishes the GTP tunnel towards SGW/PGW 314, 315. As part of the GTP information the SGSN/MME 311, 312 will send the low access priority indication if received from the UE 10. In step S404 the PGW 315 initiates the Gx session towards the PCRF 316 inserting the low access priority indication, as desired access priority, if received. In step S405 the PCRF 316 contacts the SPR 325 in order to get the subscription information of the UE 10. In step S406 the SPR 325 provides the subscription information of the UE 10. It includes an indicator whether the user is a low access priority user, the indicator being indicative of a subscribed access priority.

In step S407 the PCRF 316, based on the presence or absence of the low access priority indication from the PGW 315 and the subscription information derives the low access priority condition, as the applicable access priority. The PCRF 316 determines whether the UE 10 has established the connection as low access priority or not, and determines the policy. It responds to the PGW 315 session request according to the policy. The PCRF 316, depending on the low-access priority condition, and other factors, may decide to download to the PGW 315 an indication to reject the establishment of the PDN connection or an indication to accept the establishment of the PDN connection and/or an indication to apply a certain level of QoS and/or to apply a certain rating group and/or any other dynamic policy supported between the PGW 315 and the PCRF 316. In steps S408 and S409 the PDN connection establishment continues. In step S410 the attach procedure is completed (as in, for example, TS 23.401 after step 16 in Figure 5.3.2.1-1). In general, other factors may involve, for example, a maximum number of overridings per period (for example month) established by subscription, network situation, for example the level of congestion in the location of the UE 10.

Next an embodiment of the present invention is described for AF-initiated session modification for a low access priority UE. In this embodiment the PCRF 316 receives a service request from the AF 326 and retrieves from the SPR 325 the subscription information of the UE 10 including whether the UE 10 is a low access priority user, as a subscribed access priority. The PCRF 316 may further check if there are any applicable policies. The PCRF 316 then checks if the low access priority indication was received during the PDN connection establishment, as a desired access priority. The PCRF 316 derives the low access priority condition that applies to the PDN connection as described above, i.e has the PDN connection been activated for use with low access priority or not.

The PCRF 316 further evaluates the applicable access priority and the applicable policies considering for example an indication of the type of the communication service and/or the network status that includes the congestion status received over the Np interface. The PCRF 316 takes the appropriate decisions according to policies evaluation result. This may involve deny/accept, change rating group, apply a certain QoS, etc. If the service request is denied based on network conditions, the PCRF 316 may provide a time interval for retrying the request for resources for the communication service. This time interval is the time the AF 326 is allowed to contact the PCRF 316 again according to those conditions. For example since it is a low access priority UE 10 that has established the PDN connection with low access priority activated then the PCRF 316 may provide a longer service deferred timer.

A schematic hand shake diagram is given in Figure 5 for possible signaling amongst the involved entities according to an embodiment of the present invention. In Step 501 the AF 326 contacts the PCRF 316 to request resources for a service for certain UE 10. In Step 502 the PCRF 316 access the SPR 325 to check the subscription information related to that UE 10. In Step 503 the SPR 325 provides the subscription information of the UE 10, including whether the UE 10 is a low access priority UE 10, as subscribes access priority. In Step 504 the PCRF 316 checks whether that UE 10 established the PDN connection indicating that it was a low access priority UE 10, as desired access priority. The PCRF 316 derives the low access priority condition for that UE 10, as applicable aces priority, checks the access conditions for example, if there is congestion in the network and applies the related policies.

Depending of the outcome of the policies analysis, in some embodiments of the present invention the PCRF 316 rejects the request for example under a congestion situation and may provide the AF 326 in Step 505 with a time interval for retrying the request for resources (time when the AF 326 can reattempt connecting) that is different depending on the low access priority condition. The service can also be rejected unconditionally if it is not acceptable for that condition. In other embodiments of the present invention the PCRF 316 accepts the request and derives the appropriate QoS and charging information based on the derived low access priority condition, i.e. the applicable access priority. If the AF request is accepted, the PCRF 316 will initiate the relevant procedures over Sx and/or Gx (Steps 506, 506') in order to provide the relevant policies.

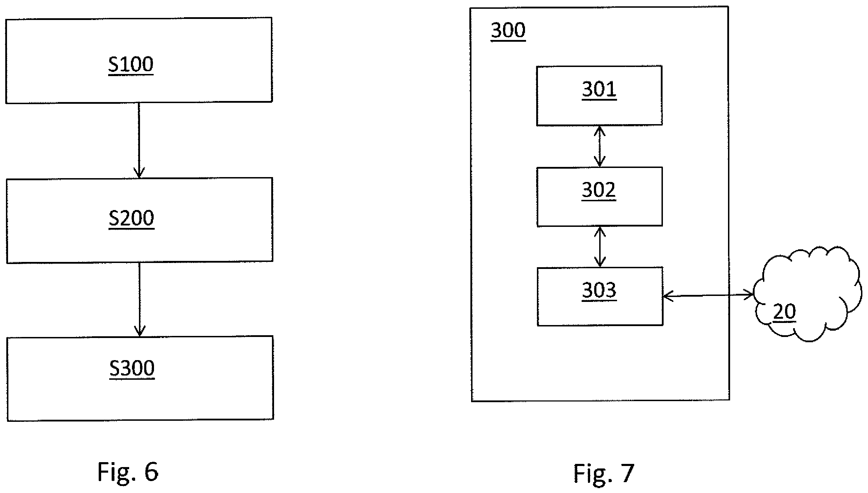

Figure 6 shows a flowchart representation of method embodiment of the present invention. This method embodiment is for operating a communication system for providing a communication service to a user terminal. The method comprises a step S100 of obtaining subscription information of the user equipment for the communication service, the subscription information being indicative of a subscribed access priority of said user equipment. The method comprises a step S200 of receiving access information indicative of a desired access priority of the user equipment. The method also comprises a step S300 of determining, based on said subscription information and said access information, an applicable access priority and a policy for providing said communication service to the user equipment.

Figure 7 shows a schematic view of a network entity 300 in communication with a network 20 according to another embodiment of the present invention. In the sense of the present invention, an entity can be any of a dedicated piece of hardware, a share of hardware that is used by various processes and tasks, a collection of distributed pieces or shares of hardware. In this way, involved processing units and possibly also memory units can be dedicated, shared, or distributed.

The network entity 300 is able to provide one or more of the functionalities of embodiments of the present invention and thus comprises a processing resource 301, such as processing unit, memory resources 302, such as memory and/or a data storage, and communication resources 303, such as communication unit/interface/receiver/transmitter, so as to be able to communicate and exchange information with network 20. The resources 301, 302, 303 may be collocated in one unit, such as a server, a computer or a processor boards, but they may also well be distributed over a network or data center.

For the entity 300 providing the one or more functionalities of embodiments of the present invention, the processing resource 301 executes code, instructions, applications, or programs that are stored in the memory resource 302. The involved data may also be retrieved from other locations over network 20 via the communication resources 303.

The embodiments of the present invention may be specifically able to provide one or more of the below advantages. Firstly, a mechanism can be provided to the operator to control the resources in the network. Specifically and related with UE with low access priority, the operator can have an active control over these UEs and can decide if they can or cannot override the low access priority condition. Further, it can provide a mechanism for avoiding a fraudulence of the services and network resource usage. Yet further, a mechanism can be provided that enables online charging for low access priority UE. The rating group can be changed based on low access priority condition and it provides the PCRF with more arguments to calculate an appropriate QoS. Moreover it optimizes the signaling related to service access as it will take place when the operator estimates that the congestion is decreased.

The embodiments of the present invention may further be able to provide one or more of the following specific advantages or may address one or more of the following problems. Existing 3GPP systems cannot determine whether any overriding of access restrictions by a UE is justified. There may be no mechanism to avoid the connection if the UE establishes an unjustified number of overriding restrictions. Further, in the current solutions, the decision to override the access restriction can be unilaterally taken by the UE. This means that this decision does not take into consideration factors like the network status, the number of users connected, the congestion situation in the mobile station location, etc. Moreover, there may be no control of the number of times the UE has decided to override this access restriction in the last period of time, so it may be not possible to put a limit per period, e.g. per month.

In conventional systems, operators may only be able to apply a specific tariffing based on the information in the Call Detail Records (CDRs) which show whether a PDN connection was activated to be used with low access priority. However, this only applies to off-line charging, so, it may be not possible to apply specific tariffing for online-charging users. The PCRF in existing solutions decides the QoS to be applied to the PDN connection without taking into account if the UE is a low access priority which has overridden the access restriction, resulting as a consequence in a non-coherent decision. In conventional conditions a low-access priority UE should receive a low QoS, unless the UE overrides this restriction. The PCRF, according to a conventional 3GPP solution, should be able to postpone the delivery of certain services upon congestion situations, providing to the application function a deferred timer that indicates the best time to retry the execution of the service. However, the lack of knowledge in the PCRF of UE low priority condition may be a drawback to decide which users connections shall or not be deferred.

Although detailed embodiments have been described, these only serve to provide a better understanding of the invention defined by the independent claims, and are not to be seen as limiting.

## Claims

1. A communication system for providing a communication service to a user equipment (10), said communication system comprising a Policy and Charging Rules Function, PCRF, (316), the PCRF (316) being configured to:
- obtain, from a subscription profile repository, SPR, (325), subscription information of the user equipment (10) for the communication service, the subscription information being indicative of a subscribed access priority of said user equipment (10);
- receive, from the user equipment (10), access information in a message, wherein the access information is originated from the user equipment (10) when the user equipment (10) initiates an establishment of a connection with the communication system, and wherein the access information is indicative of a desired
access priority of the user equipment (10), and wherein the desired access priority of the user equipment (10) is indicated as a low access priority by including a low access priority indication in the message, and check for any limitation regarding a number of times the user equipment (10) can override the subscribed access priority when the subscribed access priority is the low access priority and the low access priority indication is not included in the message from the user equipment (10); and
- determine, based on said subscription information indicative of the subscribed access priority and said access information indicative of the desired access priority, an applicable access priority and a policy for providing said communication service to the user equipment (10).

2. The communication system according to claim 1, wherein the subscription information is further indicative of an allowance of said user equipment (10) to override the subscribed access priority.

3. The communication system according to claim 1 or claim 2, wherein the subscription information is further indicative of the number of times said user equipment (10) is allowed to override said subscribed access priority.

4. The communication system according to claim 1, wherein to determine the applicable access priority and the policy, the PCRF is further configured to compare the subscribed access priority with the desired access priority and derive a low access priority condition, as the applicable access priority, based on the subscription information and the access information, and wherein said low access priority condition is indicative of whether the user equipment (10) has initiated the establishment of the connection with the low access priority.

5. The communication system according to claim 4, wherein said policy comprises at least one of an indication of accepting the establishment of the connection with said communication system, an indication of a quality of service for said communication service, and an indication of a specific rating to tariff the user equipment (10).

6. The communication system according to any one of claims 1 to 5, wherein said determination is further based on a level of congestion in the communication system.

7. The communication system of claim 1, further comprising a network entity, the network entity including the SPR (325), wherein the network entity comprises a processing resource that is configured to:
- store the subscription information indicative of the subscribed access priority of the user equipment (10); and
- report the subscription information to the PCRF (316) for the determination of the applicable access priority and the policy for providing the communication service to the user equipment (10).

8. The communication system of claim 1, further comprising a network entity for use in a communication network, the network entity including any one of a Mobility Management Entity, MME, (311) and a Serving GPRS Support Node, SGSN, (312), wherein the network entity comprises a processing resource that is configured to:
- receive the access information indicative of the desired access priority of the user equipment (10); and
- report the access information, indicative of the desired access priority, to the PCRF (316) for the determination of the applicable access priority and the policy for providing the communication service to the user equipment (10).

9. A network entity for use in a communication network, the network entity including a Policy and Charging Rules Function, PCRF, (316), the PCRF (316) comprising a processing resource configured to:
- retrieve, from a subscription profile repository, SPR, (325), subscription information of a user equipment (10) for a communication service, the subscription information being indicative of a subscribed access priority of the user equipment (10);
- receive, from the user equipment (10), access information in a message, wherein the access information is originated from the user equipment (10) when the user equipment (10) initiates an establishment of a connection with the communication system, and wherein the access information is indicative of a desired access priority of the user equipment (10), and wherein the desired access priority of the user equipment (10) is indicated as a low access priority by including a low access priority indication in the message, and check for any limitation regarding a number of times the user equipment (10) can override the subscribed access priority when the subscribed access priority is the low access priority and the low access priority indication is not included in the message from the user equipment (10); and
- determine, based on said subscription information indicative of the subscribed access priority and said access information indicative of the desired access priority, an applicable access priority and a policy for providing the communication service to the user equipment (10).

10. A method, performed by a Policy and Charging Rules Function, PCRF, (316) of a communication system, for providing a communication service to a user equipment (10), said method comprising the steps of:
- obtaining, from a subscription profile repository, SPR, (325), subscription information of the user equipment (10) for the communication service, the subscription information being indicative of a subscribed access priority of said user equipment (10);
- receiving, from the user equipment (10), access information in a message, wherein the access information is originated from the user equipment (10) when the user equipment (10) initiates an establishment of a connection with the communication system, and wherein the access information is indicative of a desired
access priority of the user equipment (10), and wherein the desired access priority of the user equipment (10) is indicated as a low access priority by including a low access priority indication in the message, and checking for any limitation regarding a number of times the user equipment (10) can override the subscribed access priority when the subscribed access priority is the low access priority and the low access priority indication is not included in the message from the user equipment (10); and
- determining, based on said subscription information indicative of the subscribed access priority and said access information indicative of the desired access priority, an applicable access priority and a policy for providing said communication service to the user equipment (10).

11. A computer program product storing code, the code, when executed on a processing unit of a Policy and Charging Rules Function, PCRF, (316), instructing the processing unit to perform the method of claim 10.

## Patentansprüche

1. Kommunikationssystem zum Bereitstellen eines Kommunikationsdienstes für ein Endgerät (10), wobei das Kommunikationssystem eine Richtlinien- und Gebührenregelfunktion, PCRF, (316), umfasst, wobei die PCRF (316) konfiguriert ist zum:
- Erzielen aus einem Abonnementprofilverzeichnis, SPR, (325), von Abonnementinformationen des Endgeräts (10) für den Kommunikationsdienst, wobei die Abonnementinformationen eine abonnierte Zugriffspriorität des Endgeräts (10) angeben;
- Empfangen aus dem Endgerät (10) von Zugriffsinformationen in einer Nachricht, wobei die Zugriffsinformationen aus dem Endgerät (10) stammen, wenn das Endgerät (10) den Aufbau einer Verbindung mit dem Kommunikationssystem einleitet, und wobei die Zugriffsinformationen eine gewünschte Zugriffspriorität des Endgeräts (10) angeben, und wobei die gewünschte Zugriffspriorität des Endgeräts (10) als eine geringe Zugriffspriorität angegeben wird, indem eine geringe Zugriffsprioritätsangabe in die Nachricht aufgenommen wird, und Überprüfen auf eine eventuelle Einschränkung dafür, wie oft das Endgerät (10) die abonnierte Zugriffspriorität außer Kraft setzen kann, wenn die abonnierte Zugriffspriorität die geringe Zugriffspriorität ist und die geringe Zugriffsprioritätsangabe nicht in der Nachricht von dem Endgerät (10) enthalten ist; und
- Bestimmen, basierend auf den Abonnementinformationen, welche die abonnierte Zugriffspriorität angeben, und den Zugriffsinformationen, welche die gewünschte Zugriffspriorität angeben, einer anwendbaren Zugriffspriorität und einer Richtlinie zum Bereitstellen des Kommunikationsdienstes für das Endgerät (10).

2. Kommunikationssystem nach Anspruch 1, wobei die Abonnementinformationen ferner eine Erlaubnis angeben, dass das Endgerät (10) die abonnierte Zugriffspriorität außer Kraft setzt.

3. Kommunikationssystem nach Anspruch 1 oder Anspruch 2, wobei die Abonnementinformationen ferner angeben, wie oft das Endgerät (10) die abonnierte Zugriffspriorität außer Kraft setzen darf.

4. Kommunikationssystem nach Anspruch 1, wobei zum Bestimmen der anwendbaren Zugriffspriorität und der Richtlinie die PCRF ferner konfiguriert ist, um die abonnierte Zugriffspriorität mit der gewünschten Zugriffspriorität zu vergleichen und um einen geringen Zugriffsprioritätszustand als die anwendbare Zugriffspriorität basierend auf den Abonnementinformationen und den Zugriffsinformationen abzuleiten, und wobei der geringe Zugriffsprioritätszustand angibt, ob das Endgerät (10) den Aufbau der Verbindung mit der geringen Zugriffspriorität eingeleitet hat.

5. Kommunikationssystem nach Anspruch 4, wobei die Richtlinie mindestens eine von einer Angabe des Annehmens des Aufbaus der Verbindung mit dem Kommunikationssystem, einer Angabe einer Dienstqualität für den Kommunikationsdienst und einer Angabe einer spezifischen Einstufung, um Gebühren auf das Endgerät (10) anzuwenden, umfasst.

6. Kommunikationssystem nach einem der Ansprüche 1 bis 5, wobei die Bestimmung ferner auf einem Überlastungsniveau in dem Kommunikationssystem basiert.

7. Kommunikationssystem nach Anspruch 1, ferner umfassend eine Netzwerkentität, wobei die Netzwerkentität das SPR (325) umfasst, wobei die Netzwerkentität eine Verarbeitungsressource umfasst, die konfiguriert ist zum:
- Speichern der Abonnementinformationen, welche die abonnierte Zugriffspriorität des Endgeräts (10) angeben; und
- Melden der Abonnementinformationen an die PCRF (316) für die Bestimmung der anwendbaren Zugriffspriorität und der Richtlinie zum Bereitstellen des Kommunikationsdienstes für das Endgerät (10).

8. Kommunikationssystem nach Anspruch 1, ferner umfassend eine Netzwerkentität zur Verwendung in einem Kommunikationsnetzwerk, wobei die Netzwerkentität eines von einer Mobilitätsverwaltungsentität, MME, (311) und einem bedienenden GPRS-Unterstützungsknoten, SGSN, (312), umfasst, wobei die Netzwerkentität eine Verarbeitungsressource umfasst, die konfiguriert ist zum:
- Empfangen der Zugriffsinformationen, welche die gewünschte Zugriffspriorität des Endgeräts (10) angeben; und
- Melden der Zugriffsinformationen, welche die gewünschte Zugriffspriorität angeben, an die PCRF (316) für die Bestimmung der anwendbaren Zugriffspriorität und der Richtlinie zum Bereitstellen des Kommunikationsdienstes für das Endgerät (10).

9. Netzwerkentität zur Verwendung in einem Kommunikationsnetzwerk, wobei die Netzwerkentität eine Richtlinien- und Gebührenregelfunktion, PCRF, (316), umfasst, wobei die PCRF (316) eine Verarbeitungsressource umfasst, die konfiguriert ist zum:
- Abrufen aus einem Abonnementprofilverzeichnis, SPR, (325), von Abonnementinformationen eines Endgeräts (10) für einen Kommunikationsdienst, wobei die Abonnementinformationen eine abonnierte Zugriffspriorität des Endgeräts (10) angeben;
- Empfangen aus dem Endgerät (10) von Zugriffsinformationen in einer Nachricht, wobei die Zugriffsinformationen aus dem Endgerät (10) stammen, wenn das Endgerät (10) den Aufbau einer Verbindung mit dem Kommunikationssystem einleitet, und wobei die Zugriffsinformationen eine gewünschte Zugriffspriorität des Endgeräts (10) angeben, und wobei die gewünschte Zugriffspriorität des Endgeräts (10) als eine geringe Zugriffspriorität angegeben wird, indem eine geringe Zugriffsprioritätsangabe in die Nachricht aufgenommen wird, und Überprüfen auf eine eventuelle Einschränkung dafür, wie oft das Endgerät (10) die abonnierte Zugriffspriorität außer Kraft setzen kann, wenn die abonnierte Zugriffspriorität die geringe Zugriffspriorität ist und die geringe Zugriffsprioritätsangabe nicht in der Nachricht aus dem Endgerät (10) enthalten ist; und
- Bestimmen, basierend auf den Abonnementinformationen, welche die abonnierte Zugriffspriorität angeben, und den Zugriffsinformationen, welche die gewünschte Zugriffspriorität angeben, einer anwendbaren Zugriffspriorität und einer Richtlinie zum Bereitstellen des Kommunikationsdienstes für das Endgerät (10).

10. Verfahren, ausgeführt durch eine Richtlinien- und Gebührenregelfunktion, PCRF, (316) eines Kommunikationssystems zum Bereitstellen eines Kommunikationsdienstes für ein Endgerät (10), wobei das Verfahren folgende Schritte umfasst:
- Erzielen aus einem Abonnementprofilverzeichnis, SPR, (325), von Abonnementinformationen des Endgeräts (10) für den Kommunikationsdienst, wobei die Abonnementinformationen eine abonnierte Zugriffspriorität des Endgeräts (10) angeben;
- Empfangen aus dem Endgerät (10) von Zugriffsinformationen in einer Nachricht, wobei die Zugriffsinformationen aus dem Endgerät (10) stammen, wenn das Endgerät (10) den Aufbau einer Verbindung mit dem Kommunikationssystem einleitet, und wobei die Zugriffsinformationen eine gewünschte Zugriffspriorität des Endgeräts (10) angeben, und wobei die gewünschte Zugriffspriorität des Endgeräts (10) als eine geringe Zugriffspriorität angegeben wird, indem eine geringe Zugriffsprioritätsangabe in die Nachricht aufgenommen wird, und Überprüfen auf eine eventuelle Einschränkung dafür, wie oft das Endgerät (10) die abonnierte Zugriffspriorität außer Kraft setzen kann, wenn die abonnierte Zugriffspriorität die geringe Zugriffspriorität ist und die geringe Zugriffsprioritätsangabe nicht in der Nachricht aus dem Endgerät (10) enthalten ist; und
- Bestimmen, basierend auf den Abonnementinformationen, welche die abonnierte Zugriffspriorität angeben, und den Zugriffsinformationen, welche die gewünschte Zugriffspriorität angeben, einer anwendbaren Zugriffspriorität und einer Richtlinie zum Bereitstellen des Kommunikationsdienstes für das Endgerät (10).

11. Computerprogrammprodukt, das Code speichert, wobei der Code, wenn er auf einer Verarbeitungseinheit einer Richtlinien- und Gebührenregelfunktion, PCRF, (316), ausgeführt wird, die Verarbeitungseinheit anweist, das Verfahren nach Anspruch 10 auszuführen.

## Revendications

1. Système de communication pour la fourniture d'un service de communication à un équipement utilisateur (10), ledit système de communication comprenant une fonction de règles de politique et de facturation, PCRF, (316), la PCRF (316) étant configurée pour :
- obtenir, à partir d'un référentiel de profil d'abonnement, SPR, (325), les informations d'abonnement de l'équipement utilisateur (10) pour le service de communication, les informations d'abonnement étant indicatives d'une priorité d'accès abonné dudit équipement utilisateur (10) ;
- recevoir, à partir de l'équipement utilisateur (10), des informations d'accès dans un message, dans lequel les informations d'accès proviennent de l'équipement utilisateur (10) lorsque l'équipement utilisateur (10) initie un établissement d'une connexion avec le système de communication, et dans lequel les informations d'accès sont indicatives d'une priorité d'accès souhaitée de l'équipement utilisateur (10), et dans lequel la priorité d'accès souhaitée de l'équipement utilisateur (10) est indiquée comme une priorité d'accès faible en incluant une indication de priorité d'accès faible dans le message, et vérifier si une quelconque limitation relative à un certain nombre de fois où l'équipement utilisateur (10) peut passer outre la priorité d'accès abonné lorsque la priorité d'accès abonné est la priorité d'accès faible et que l'indication de priorité d'accès faible n'est pas incluse dans le message de l'équipement utilisateur (10) ; et
- déterminer, sur la base desdites informations d'abonnement indicatives de la priorité d'accès abonné et desdites informations d'accès indicatives de la priorité d'accès souhaitée, une priorité d'accès applicable et une politique de fourniture dudit service de communication à l'équipement utilisateur (10).

2. Système de communication selon la revendication 1, dans lequel les informations d'abonnement sont en outre indicatives d'une autorisation pour ledit équipement utilisateur (10) de passer outre la priorité d'accès abonné.

3. Système de communication selon la revendication 1 ou la revendication 2, dans lequel les informations d'abonnement sont en outre indicatives du nombre de fois que ledit équipement utilisateur (10) est autorisé à passer outre ladite priorité d'accès abonné.

4. Système de communication selon la revendication 1, dans lequel pour déterminer la priorité d'accès applicable et la politique, la PCRF est en outre configurée pour comparer la priorité d'accès abonné avec la priorité d'accès souhaitée et dériver une condition de priorité d'accès faible, en tant que la priorité d'accès applicable, sur la base des informations d'abonnement et des informations d'accès, et dans lequel ladite condition de priorité d'accès faible est indicative du fait de déterminer si l'équipement utilisateur (10) a initié l'établissement de la connexion avec la priorité d'accès faible.

5. Système de communication selon la revendication 4, dans lequel ladite politique comprend au moins une d'une indication de l'acceptation de l'établissement de la connexion avec ledit système de communication, d'une indication d'une qualité de service pour ledit service de communication et d'une indication d'une cote spécifique pour tarifer l'équipement utilisateur (10).

6. Système de communication selon l'une quelconque des revendications 1 à 5, dans lequel ladite détermination est en outre basée sur un niveau de congestion dans le système de communication.

7. Système de communication selon la revendication 1, comprenant en outre une entité de réseau, l'entité de réseau incluant le SPR (325), dans lequel l'entité de réseau comprend une ressource de traitement qui est configurée pour :
- stocker les informations d'abonnement indicatives de la priorité d'accès abonné de l'équipement utilisateur (10) ; et
- signaler les informations d'abonnement à la PCRF (316) pour la détermination de la priorité d'accès applicable et la politique de fourniture du service de communication à l'équipement utilisateur (10).

8. Système de communication selon la revendication 1, comprenant en outre une entité de réseau pour être utilisée dans un réseau de communication, l'entité de réseau incluant l'une quelconque d'une entité de gestion de mobilité, MME (311) et un nœud de support GPRS de service, SGSN (312), dans lequel l'entité de réseau comprend une ressource de traitement qui est configurée pour :
- recevoir les informations d'accès indicatives de la priorité d'accès souhaitée de l'équipement utilisateur (10) ; et
- signaler les informations d'accès, indicatives de la priorité d'accès souhaitée, à la PCRF (316) pour la détermination de la priorité d'accès applicable et de la politique de fourniture du service de communication à l'équipement utilisateur (10).

9. Entité de réseau pour être utilisée dans un réseau de communication, l'entité de réseau incluant une fonction de règles de politique et de facturation, PCRF, (316), la PCRF (316) comprenant une ressource de traitement configurée pour :
- récupérer, à partir d'un référentiel de profil d'abonnement, SPR, (325), les informations d'abonnement d'un équipement utilisateur (10) pour un service de communication, les informations d'abonnement étant indicatives d'une priorité d'accès abonné de l'équipement utilisateur (10) ;
- recevoir, à partir de l'équipement utilisateur (10), des informations d'accès dans un message, dans lequel les informations d'accès proviennent de l'équipement utilisateur (10) lorsque l'équipement utilisateur (10) initie un établissement d'une connexion avec le système de communication, et dans lequel les informations d'accès sont indicatives d'une priorité d'accès souhaitée de l'équipement utilisateur (10), et dans lequel la priorité d'accès souhaitée de l'équipement utilisateur (10) est indiquée comme une priorité d'accès faible en incluant une indication de priorité d'accès faible dans le message, et vérifier si une quelconque limitation relative à un certain nombre de fois où l'équipement utilisateur (10) peut passer outre la priorité d'accès abonné lorsque la priorité d'accès abonné est la priorité d'accès faible et que l'indication de priorité d'accès faible n'est pas incluse dans le message de l'équipement utilisateur (10) ; et
- déterminer, sur la base desdites informations d'abonnement indicatives de la priorité d'accès abonné et desdites informations d'accès indicatives de la priorité d'accès souhaitée, une priorité d'accès applicable et une politique de fourniture du service de communication à l'équipement utilisateur (10).

10. Procédé, exécuté par une fonction de règles de politique et de facturation, PCRF, (316) d'un système de communication, pour la fourniture d'un service de communication à un équipement utilisateur (10), ledit procédé comprenant les étapes :
- d'obtention, à partir d'un référentiel de profil d'abonnement, SPR, (325), des informations d'abonnement de l'équipement utilisateur (10) pour le service de communication, les informations d'abonnement étant indicatives d'une priorité d'accès abonné dudit équipement utilisateur (10) ;
- de réception, à partir de l'équipement utilisateur (10), des informations d'accès dans un message, dans lequel les informations d'accès proviennent de l'équipement utilisateur (10) lorsque l'équipement utilisateur (10) initie un établissement d'une connexion avec le système de communication, et dans lequel les informations d'accès sont indicatives d'une priorité d'accès souhaitée de l'équipement utilisateur (10), et dans lequel la priorité d'accès souhaitée de l'équipement utilisateur (10) est indiquée comme une priorité d'accès faible en incluant une indication de priorité d'accès faible dans le message, et en vérifiant si une quelconque limitation relative à un certain nombre de fois où l'équipement utilisateur (10) peut passer outre la priorité d'accès abonné lorsque la priorité d'accès abonné est la priorité d'accès faible et que l'indication de priorité d'accès faible n'est pas incluse dans le message de l'équipement utilisateur (10) ; et
- de détermination, sur la base desdites informations d'abonnement indicatives de la priorité d'accès abonné et desdites informations d'accès indicatives de la priorité d'accès souhaitée, d'une priorité d'accès applicable et d'une politique de fourniture dudit service de communication à l'équipement utilisateur (10).

11. Code de stockage d'un produit de programme informatique, le code, lorsqu'il est exécuté sur une unité de traitement d'une fonction de règles de politique et de facturation, PCRF, (316), ordonnant à l'unité de traitement d'exécuter le procédé selon la revendication 10.
